# EUROPEAN PATENT SPECIFICATION

(11) **EP 4 377 195 B1**
(45) Date of publication and mention of the grant of the patent: **03.09.2025**
(21) Application number: 22747067.1
(22) Date of filing: 29.07.2022
(51) Int. Cl.: B63B 7/08

(54) **FLOATING SOLAR ENERGY SYSTEM**
SCHWIMMENDES SOLARENERGIESYSTEM
SYSTÈME D'ÉNERGIE SOLAIRE FLOTTANT

(30) Priority: 30.07.2021 EP 21188836
(43) Date of publication of application: 05.06.2024
(73) Proprietor: Nederlandse Organisatie voor toegepast-natuurwetenschappelijk Onderzoek TNO, 2595 DA 's-Gravenhage (NL)
(72) Inventor: SOPPE, Wilhelmus Jozef, 2595 DA 's-Gravenhage (NL)
(74) Representative: Nederlandsch Octrooibureau
(86) International application number: PCT/EP2022/071368
(87) International publication number: WO 2023/006953

(56) References cited:
- EP-A1- 2 492 374
- WO-A1-97/42072
- FR-A1- 3 097 193

## Description

### Field of the invention

The present invention relates to a floating solar energy system comprising a plurality of solar panels and to a method for manufacturing such a floating solar energy system. Also, the present invention relates to a method of operation of such a floating solar energy system.

### Background

From the prior art floating solar energy platforms are known which consist of a floating platform whereon a plurality of solar panels is arranged. Such floating solar energy platforms enable to generate and supply electric power at offshore locations. There is a demand for such platforms either as a temporary energy source during offshore construction work or as a permanent energy source serving remote sites or communities.

However, in many offshore locations weather conditions can be so violent that such a platform must be protected by bringing the platform to safer waters or transforming the platform to a more compact shape that better withstands the conditions.

Also, there is a need for improved ease of transportation and the protection of the platform during transportation between locations.

EP2492374A1 describes a solar power generation system that is configured to be provided with: a solar cell raft which floats on the sea while being equipped with a solar cell unit formed by connecting a plurality of solar cells in the shape of a sheet on a floating body and a solar cell raft mother vessel. The solar cell unit can be stored in the mother vessel in a rolled or folded shape. Documents WO 97/42072 A1 and FR 3 097 193 A1 constitute further relevant prior art.

It is an object of the present invention to overcome or mitigate one or more of the disadvantages from the prior art.

### Summary of the invention

The object is achieved by a floating solar energy system comprising at least a solar deck and a pair of floating bodies, the solar deck comprising a carrier surface and a plurality of solar panels for capturing energy from a radiation source that is mounted on the carrier surface; the solar deck at one elongated edge thereof being mechanically connected with one of the floating bodies and at an opposite edge with the other of the floating bodies; the solar panels being attached on the carrier surface of the solar deck in rows parallel to the edges, wherein
the carrier surface comprises a plurality of elongated carrier panels arranged lengthwise parallel to the edges and next to each other; the carrier panels are coupled to each other by intermediate joints each row of solar panels arranged on a respective one of the carrier panels, wherein the carrier panels consist of interconnected inflatable compartments and the system is configured for contracting the solar deck by folding the carrier panels of the carrier surface into a pleated stack in which the surfaces of the solar panels on the carrier panels are facing each other and for expanding the solar deck to a substantially flat state of the carrier surface by unfolding the carrier panels of the carrier surface in the stack.

The floating solar energy system provides that during folding the solar panels are brought in a pleated arrangement forming an ensemble in which the solar panels are stacked on each other with their surfaces oriented vertically. This arrangement strengthens the solar panels in the ensemble and reduces the risk of damage to individual panels during severe weather conditions or transportation. It also improves the manoeuvrability during transportation.

According to the invention, the floating solar energy system as described above provides that the carrier panels consist of interconnected inflatable compartments. When inflated, the inflatable components act as floaters and provide additional buoyancy to the solar deck carrying the solar panels.

By increasing the air pressure in the interconnected inflatable compartments the carrier panels can be easily expanded and unfolded.

In a preferred embodiment, each inflatable compartment is a drop-stitch chamber arrangement in which each drop-stitch chamber comprises a pair of opposing gastight layers with a plurality of threads attached between the layers. The use of the drop-stitch chamber provides that when the chamber is pressurised a relatively inflexible carrier panel is created. As result the carrier surface that supports the solar panels has a relatively high stiffness.

Also, the present invention relates to a method for operating a floating solar energy system comprising at least a solar deck and a pair of floating bodies, the solar deck comprising a carrier surface and a plurality of solar panels for capturing energy from a radiation source that is mounted on the carrier surface, in which the solar deck at one elongated edge thereof is mechanically connected with one of the floating bodies and at the opposite edge with the other of the floating bodies and in a substantially flat state of the solar deck, the solar panels are arranged on the carrier surface of the solar deck in rows parallel to the edges, each of the solar panel oriented for facing the radiation source, wherein the carrier surface comprises a plurality of elongated carrier panels arranged lengthwise parallel to the edges and next to each other; the carrier panels are coupled to each other by one or more intermediate joints; each row of solar panels arranged on a respective one of the carrier panels, wherein the carrier panels consist of interconnected inflatable compartments,
the method comprising
providing a step of contracting the solar deck by folding the carrier panels of the carrier surface from the substantially flat state into a pleated style stack or folded shape in which the surfaces of the solar panels on the carrier panels are facing each other and a step of expanding the solar deck from the pleated style stack to the substantially flat state by unfolding the carrier panels of the carrier surface in the stack.

Moreover, the present invention relates to a method for manufacturing a floating solar energy system comprising at least a solar deck and a pair of floating bodies, the solar deck comprising a carrier surface and a plurality of solar panels for capturing energy from a radiation source that is mounted on the carrier surface, the method comprising:
providing the plurality of solar panels,
providing the carrier surface comprising a plurality of elongated carrier panels arranged lengthwise parallel and next to each other, in which the carrier panels are coupled to each other by intermediate joints and wherein the carrier panels consist of interconnected inflatable compartments;
providing the pair of floating bodies;
attaching each row of solar panels on a respective one of the carrier panels to form the solar deck;
connecting the solar deck at one elongated edge thereof with one of the floating bodies and at the opposite edge with the other of the floating bodies, the edges running parallel to the joints;
providing a configuration of the system for contracting the solar deck by folding the carrier panels of the carrier surface as a pleated style stack into a folded state in which the surfaces of the solar panels on the carrier panels are facing each other and a configuration for expanding the solar deck from the folded state of the pleated style stack into a substantially flat state by unfolding the carrier panels of the carrier surface in the stack.

Advantageous embodiments are further defined by the dependent claims.

### Brief description of drawings

The present invention will be described in more detail below, by way of example only, with reference to the accompanying drawings which are schematic in nature and in which:
Figure 1 shows a schematic perspective view of a floating solar energy system according to an embodiment;
Figure 2 and 3 show cross-section of a floating solar energy system according to an embodiment;
Figure 4 shows a schematic top view of a floating solar energy system according to an embodiment and
Figure 5A, 5B show a cross-section of a carrier panel of the carrier surface of a floating solar energy system according to an embodiment.

In the drawings illustrative embodiments of the invention are shown. The drawings are intended exclusively for illustrative purposes. The scope of the invention is only limited by the definitions presented in the appended claims.

Similar or corresponding elements, features or structures are indicated by the same reference signs. The drawings are not intended to be on scale.

### Detailed description of embodiments

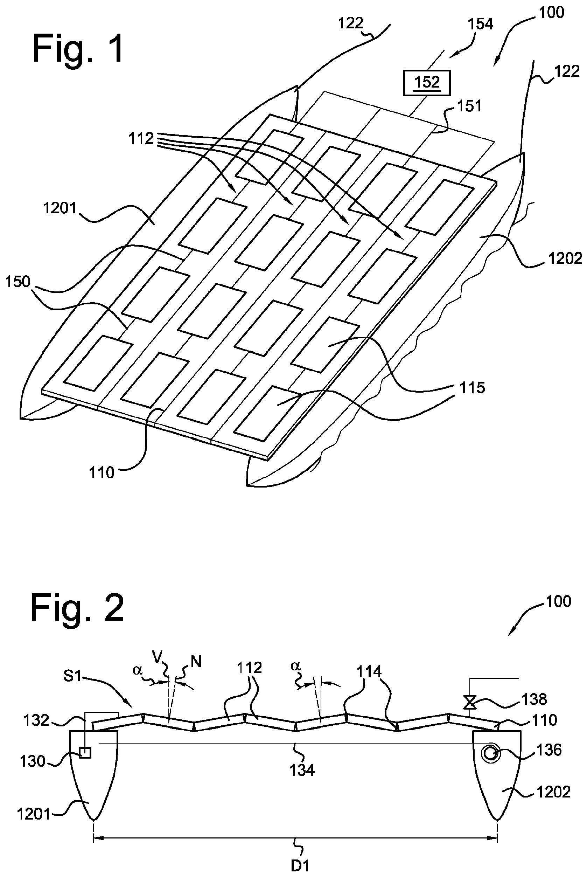

Figure 1 shows a schematic perspective view of a floating solar energy system according to an embodiment.

According to an embodiment the floating solar energy system 100 comprises at least a pair of floating bodies 120, and a solar deck 110.

The solar deck 110 comprises a carrier surface and a plurality of solar panels 115. The solar panels are arranged in rows on the carrier surface, as will be explained in more detail below.

The solar deck is arranged between the decks of the floating bodies 1201, 1202, with the floating bodies oriented in parallel to each other. One outer edge of the solar deck is coupled to a first 1201 of the floating bodies. An opposite outer edge of the solar deck is coupled to a second 1202 of the floating bodies.

Each floating body can be one of a group comprising a hull, a pontoon, a hydrofoil or generally a float.

According to the invention, the carrier surface comprises a plurality of elongated parallel carrier panels 112 that are interconnected at their respective edges by joints (i.e. flexible connections) or hinges which each allow to fold up (or unfold) the carrier surface into (or from) a pleated stack. The carrier panels 112 are oriented with their edges parallel to the outer edges that are coupled to the floating bodies 1201, 1202. The rows of solar panels 110 are positioned on the carrier panels in-between the joints.

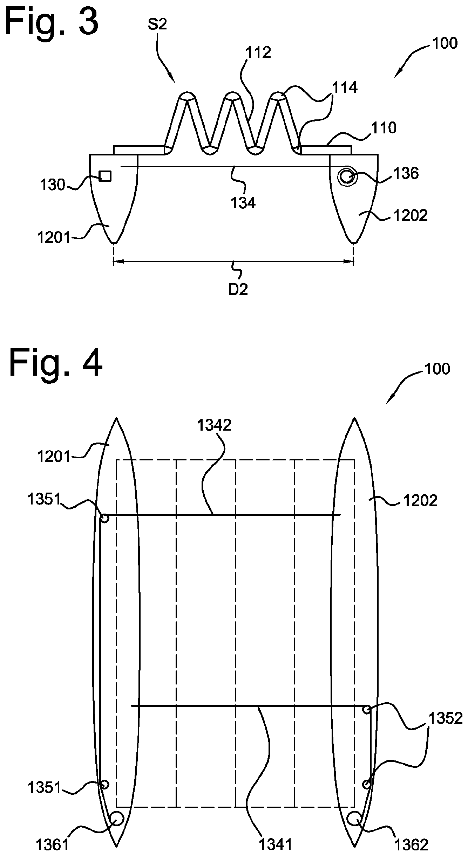

This arrangement allows that the carrier surface can be moved between a flat expanded shape and a pleated shape. In the flat expanded shape the carrier surface provides a substantially flat surface on which the solar panels are positioned in rows adjacent to each other. The light capturing surfaces of the solar panels 115 are all facing in a same direction perpendicular to the flat surface, in a manner that in operation the solar panels are facing towards a radiation source, such as the Sun, for capturing radiative energy. In the pleated shape, the carrier surface is in a folded position in which the carrier panels are stacked in a zig-zag style. In correspondence, the solar panels 115 are rotated over about 90° such that in the zig-zag stack the light capturing surfaces of the solar panels facing towards or away from each other (in pairs the panel orientation is front-to-front or back-to-back in the folded position) and are directed towards the outer edges of the floating solar energy system. These arrangements will be described in more detail with reference to Figures 2 and 3.

The couplings between the outer edges of the solar deck 110 and the respective floating body can comprise joints or hinges, such that in operation the floating body and the solar deck can rotate relative to each other along the joint axis or hinge axis at the respective outer edge.

The solar panels 115 can be based on either silicon-based solar cells or thin film photovoltaic devices.

The floating bodies 1201, 1202 can be provided with connection means for towing by a service vessel (not shown). Such a service vessel can also be used to keep the floating solar energy system at a stationary position during operations. Additionally or alternatively, a mooring system or anchoring system 122 can be provided.

Additionally, the floating solar energy system may comprise electrical outlet 154 for electrically coupling the solar panels 115 to a power grid or electrical energy consumers either offshore or onshore (not shown).

Preferably, on each carrier panel within the corresponding row the solar panels are coupled electrically by wiring 150. In an embodiment, each row of solar panels is electrically coupled 151 to a converter device 152 which is configured to convert the electrical power from the solar panels to a practical electrical output on the outlet 154.

In some embodiments, the floating solar energy system comprises one or more additional floating bodies (not shown) in addition to the pair of floating bodies at the outer edges of the carrier surface. The one or more additional floating bodies are arranged between the pair of floating bodies 1201, 1202 at the outer edges and are used as additional supports for the carrier surface while providing additional buoyancy to the floating solar energy system. Also the weight of each additional floating body can counteract any upward force on the solar deck caused by air currents and thus provide improved stability to the floating solar energy system during operation.

Each additional floating body can have a similar structure and/or shape as the pair of floating bodies 1201, 1202 with a same or different length. Each additional floating body can consist of a single floating element but can optionally be an assembly of series of smaller floating elements arranged in a row, which runs parallel to the outer floating bodies 1201, 1202.

Figure 2 and 3 shows cross-section of a floating solar energy system according to an embodiment.

In Figure 2 a cross-section of the floating solar energy system 100 is shown in the expanded shape S1. In the expanded shape S1 the solar panels 115 are arranged in a substantially flat position. In a preferred embodiment as shown the carrier panels 112 of the carrier surface are configured to have a small inclination difference α of the normal N of solar panels relative to the vertical V between adjacent rows of solar panels in the expanded state. This inclination provides a pre-set orientation of the carrier panels that assists the folding of the carrier panels (see fig 3 and 4).

The inclination of the solar panels 115 can improve the energy capture when the floating solar energy system is oriented such that the surfaces of the solar panels in adjacent rows are inclined towards east and west. In particular at higher latitudes an arrangement of solar panels with an inclination of the carrier panels as shown provides improved efficiency.

Additionally, by providing an inclination of the solar panels 115 a drainage gradient is created to drain away any water on the solar panels.

According to an embodiment, the carrier panels 112 consist of interconnected inflatable compartments. The inflatable components act as floaters and provide buoyancy to the solar deck 110 carrying the solar panels 115. In this embodiment, the floating solar energy system comprises a gas pump 130 that is connected to the inflatable compartments 112 through a conduit 132. Preferably, a valve (not shown) is provided to close or open the conduit. By pressurising the inflatable compartments when the carrier panels are stacked in the folded position, the stack is unfolding and forms the expanded shape. At the same time, the distance between the pair of floating bodies enlarges from a relatively close distance at the folded position of the carrier panels to a relatively wide distance D1 at the unfolded expanded position.

Additionally, an exhaust valve 138 allows to release pressure from the inflatable compartments 112 so as to enable folding of the carrier panels to the pleated shape. In an embodiment, the gas pump 130 may be configured as a reversible pump that in addition to pressurizing the inflatable components is configured for evacuating gas from the inflatable components.

In Figure 3 a cross-section of the floating solar energy system 100 is shown in the pleated shape or folded shape S2. To contract the solar deck 110 from the substantially flat expanded shape S1 to the pleated shape S2, an arrangement of cables 134 and pulleys (not shown) is provided. The cables 134 run between the pair of floating bodies 1201, 1202 at the outer edges of the solar deck. The pulleys are provided for guiding the cables 134 along between the carrier panels 112. In some embodiments the carrier panels 112 are provided with a passage or slot for each cable running between the pair of floating bodies.

To fold the solar deck the cables 134 are pulled in which causes the distance D2 between the floating bodies to diminish and the carrier panels to fold up to a pleated shape. In an embodiment, the floating solar energy system 100 comprises a winch / winches 136 for either pulling in or running out the cable(s).

While the carrier panels 112 are folding up into a stack, pressure is released from the inflatable compartments through the provided valve 138 or by the gas pump 130 if this is arranged as a reversible gas pump.

In a further embodiment, to protect the exposed surfaces of the solar panels 115 on the carrier panels 112 in the folded position, either an additional cover layer (not shown) may be arranged on the solar panel surfaces for protection or spacers on the carrier panels 112 may be provided to have some interspace between adjacent solar panels facing each other in the folded position.

In an embodiment, the solar panels 115 are interconnected electrically 150 along the carrier panel 112 on which the solar panels are mounted. Between carrier panels, interconnecting electric wiring 151 can be provided to have a further electrical interconnection of rows of solar panels 115. For example, the interconnecting electric wiring can be arranged parallel to cables that run between the floating bodies 1201, 1202 at the outer edges. Optionally, a cable and electric wiring are integrated in a single line.

The electric converter device 152 and outlet 154 for connecting to the power grid or electric energy consumers can be arranged on one of the floating bodies1201, 1202. Alternatively, the electric converter device 152 and outlet 154 can be arranged on the service vessel when coupled to the floating solar energy system 100.

Figure 4 shows a schematic top view of a floating solar energy system 100 according to an embodiment. The floating solar energy system 100 comprises a contracting system comprising at least a first and second cable 1341, 1342, a first and second pair of pulleys 1351, 1352 and a pair of winches 1361, 1362. The first and second cables run parallel between the pair of floating bodies 1201, 1202 at the outer edges of the carrier surface. The first cable 1341 is fastened at one end to a first 1201 of the floating bodies. At the other end the first cable 1341 is connected over a first pair 1352 of pulleys to the winch 1362 on the other outer floating body 1202; the pair of pulleys and the winch each arranged on the second 1202 of the floating bodies.

For the second cable 1342 the arrangement is reversed: the second cable 1342 is fastened at one end to the second 1202 of the floating bodies. At the other end the second cable is connected over a second pair of pulleys 1351 to the winch 1361 on the first 1201 of the floating bodies; the second pair of pulleys 1351 and the second winch 1361 each arranged on the first 1201 of the floating bodies.

The winches are powered by a dedicated power source, preferably an electric power source.

The contracting system as described above is configured to retract the two cables 1341, 1342 concurrently at substantially the same rate. Preferably, a controller is provided to control the contracting system, explained in more detail below.

In a further embodiment, the cables are connected to winches arranged on a separate float, for example on the service vessel.

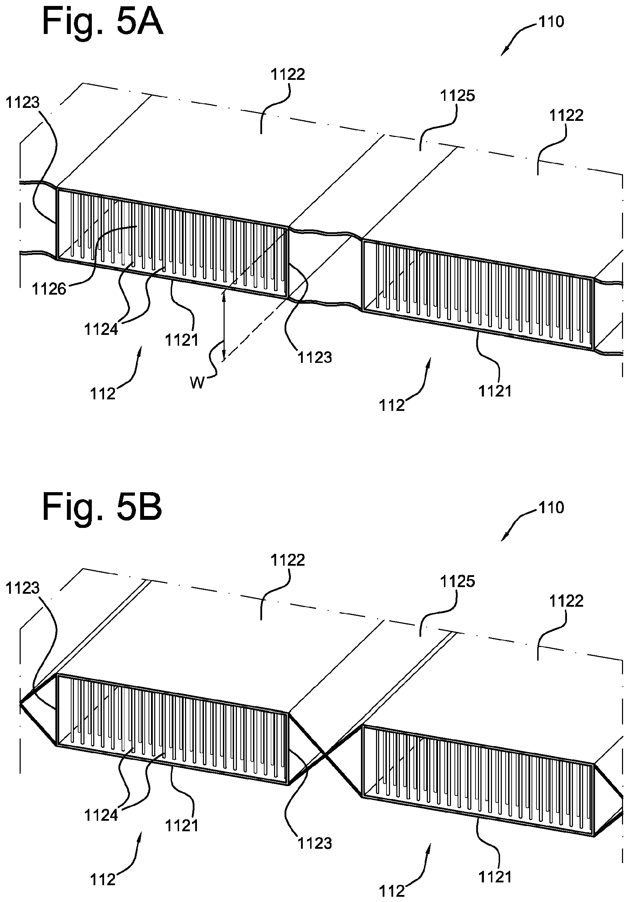

Figure 5A shows a cross-section of a carrier panel 112 of the carrier surface of a floating solar energy system 100.

According to an embodiment, the carrier panel 112 is an inflatable compartment having a drop-stitch construction. The carrier panel 112 has an elongated rectangular shape, with top 1122 and bottom 1121 walls, side walls 1123 and end walls (not shown) defining an internal volume 1126.

The top and bottom, side and end walls 1121, 1122, 1123 are typically gas-tight to provide that the internal volume 1126 can be pressurised with gas or air by the gas /air pump. The internal volume 1126 provides buoyancy to the solar deck 110 in addition to the pair of floating bodies 1201, 1202 and optionally the additional floating bodies.

Between the opposing top and bottom walls 1122, 1121 a plurality of threads 1124 are attached. The threads 1124 all have a substantially same length as the height of the side and end walls 1123 to provide a constant width W between the top and bottom walls when the panel is pressurised. In this manner it is provided that the top surface of the panels 112 is flat, rigid and substantially inflexible. As result a stable attachment of the solar panels 115 on the carrier panels 112 is obtained. In an embodiment, between adjacent panels 112 a connecting joint 1125 is provided by means of an intermediate elongated and comparatively small gas-tight volume, which volume is void of threads running between its top and bottom walls. This connecting joint can form a conduit for gas flow between the carrier panels.

As shown in a cross-section of a carrier panel of the carrier surface of a floating solar energy system in Figure 5B, the connecting joint 1125 can also be embodied as a flexible strip, for example a stitched strip of cloth connected to the top and bottom walls of the inflatable component.

In an embodiment, the floating solar energy system 100 is provided with a controller to control the expansion and contraction of the solar deck 110 by releasing the cables 134; 1341, 1342 and increasing the gas pressure in the inflatable compartments and respectively pulling in the cables and releasing pressure from the compartments. If the controller is configured with communication means such as a transceiver, the expansion and contraction of the solar deck can be controlled remotely. The controller can be arranged in one of the floating bodies 1201, 1202, for example near the gas pump.

Optionally, the floating solar energy system is provided with an additional deck arranged on one or both of the outward extending sides of floating bodies. Such additional deck may have any arbitrary shape and may be used for carrying auxiliary equipment.

The invention has been described with reference to the preferred embodiment. Obvious modifications and alterations will occur to others upon reading and understanding the preceding detailed description. It is intended that the invention be construed as including all such modifications and alterations insofar as they come within the scope of the appended claims.

## Claims

1. A floating solar energy system (100) comprising at least a solar deck (110) and a pair of floating bodies (1201,1202), the solar deck comprising a carrier surface and a plurality of solar panels (115) for capturing energy from a radiation source that is mounted on the carrier surface;
the solar deck at one elongated edge thereof being mechanically connected with one of the floating bodies (1201) and at an opposite edge with the other of the floating bodies (1202);
the solar panels being attached on the carrier surface of the solar deck in rows parallel to the edges, **characterised in that**
the carrier surface comprises a plurality of elongated carrier panels (112) arranged lengthwise parallel to the edges and next to each other; the carrier panels are coupled to each other by intermediate joints (114) each row of solar panels arranged on a respective one of the carrier panels,
wherein the carrier panels (112) consist of interconnected inflatable compartments and
the system is configured for contracting the solar deck by folding the carrier panels of the carrier surface into a pleated stack (S2) in which the surfaces of the solar panels on the carrier panels are facing each other and for expanding the solar deck to a substantially flat state (S1) of the carrier surface by unfolding the carrier panels of the carrier surface in the stack.

2. The system according to claim 1, wherein the floating bodies are positioned at relatively close distance from each other when the solar deck is contracted and at a relatively wide distance when the solar deck is expanded, the wide distance being larger than the close distance.

3. The system according to claim 1 or claim 2, further comprising one or more additional floating bodies in addition to the pair of floating bodies, the one or more additional floating bodies arranged between the pair of floating bodies as additional support for the carrier surface.

4. The system according to any one of the preceding claims 1 - 3, wherein the system further comprises an arrangement of a plurality of cables (134; 1341, 1342) and pulleys (135; 1351, 1352) for the contraction of the solar deck, each of the cables connecting the one of the floating bodies with the other of the floating bodies.

5. The system according to claim 4, wherein the system comprises a gas pump (130) connected to the compartments for pressurizing the compartments while the solar deck is expanded, and the interconnected inflatable compartments comprise at least one controllable valve (138) for releasing gas from the compartments when contracting and/or the gas pump is a reversible gas pump.

6. The system according to claim 1 or claim 5, wherein one or more of the inflatable compartments is a drop-stitch chamber arrangement with the drop-stitch chamber comprising a pair of opposing gastight layers (1121, 1122) with a plurality of threads of substantially constant length attached between the layers.

7. The system according to claim 5, wherein the joint (114) between adjacent compartments consists of either a portion of the gastight layers void of threads forming a conduit for gas flow between the compartments or a flexible strip.

8. The system according to any one of the preceding claims, wherein the solar panels (115) are based on silicon-based solar cells or thin-film photovoltaic foils.

9. The system according to claim 8, wherein each solar panel (115) is provided with either a cover layer for protecting the surface of the solar panel when the solar deck is folded,
or spacers for spacing apart solar panels facing each other in the stack when the solar deck is folded.

10. The system according to any one of the preceding claims 1 - 9, wherein the carrier panels (112) are provided with a passage or slot for each cable (134; 1341, 1342) running between the pair of floating bodies (1201, 1202).

11. The system according to any one of the preceding claims 2 - 10, wherein the at least one additional floating body has a similar shape and length as the pair of floating bodies.

12. The system according to any one of the preceding claims 2 - 10, wherein the at least one additional floating body consists of either a single floating element or a series of floating elements assembled in a row parallel to the length of each of the pair floating bodies.

13. A method for operating a floating solar energy system (100) comprising at least a solar deck (110) and a pair of floating bodies (1201, 1202), the solar deck comprising a carrier surface and a plurality of solar panels (115) for capturing energy from a radiation source that is mounted on the carrier surface,
in which the solar deck at one elongated edge thereof is mechanically connected with one (1201) of the floating bodies and at the opposite edge with the other (1202) of the floating bodies and
in a substantially flat state of the solar deck, the solar panels are arranged on the carrier surface of the solar deck in rows parallel to the edges, each of the solar panel oriented for facing the radiation source,
wherein the carrier surface comprises a plurality of elongated carrier panels arranged lengthwise parallel to the edges and next to each other; the carrier panels are coupled to each other by one or more intermediate joints (114); each row of solar panels arranged on a respective one of the carrier panels, wherein the carrier panels (112) consist of interconnected inflatable compartments the method comprising
providing a step of contracting the solar deck by folding the carrier panels of the carrier surface from the substantially flat state (S1) into a pleated style stack or folded shape (S2) in which the surfaces of the solar panels on the carrier panels are facing each other and
a step of expanding the solar deck from the pleated style stack (S2) to the substantially flat state (S1) by unfolding the carrier panels of the carrier surface in the stack.

14. A method for manufacturing a floating solar energy system (100) comprising at least a solar deck (110) and a pair of floating bodies (1201, 1202), the solar deck comprising a carrier surface and a plurality of solar panels (115) for capturing energy from a radiation source that is mounted on the carrier surface, the method comprising:
providing the plurality of solar panels,
providing the carrier surface comprising a plurality of elongated carrier panels (112) arranged lengthwise parallel and next to each other, in which the carrier panels are coupled to each other by intermediate joints (114) and wherein the carrier panels (112) consist of interconnected inflatable compartments;
providing the pair of floating bodies;
attaching each row of solar panels on a respective one of the carrier panels to form the solar deck;
connecting the solar deck at one elongated edge thereof with one of the floating bodies and at the opposite edge with the other of the floating bodies, the edges running parallel to the joints;
providing a configuration of the system for contracting the solar deck by folding the carrier panels of the carrier surface as a pleated style stack into a folded state (S2) in which the surfaces of the solar panels on the carrier panels are facing each other and a configuration for expanding the solar deck from the folded state of the pleated style stack into a substantially flat state (S1) by unfolding the carrier panels of the carrier surface in the stack.

## Patentansprüche

1. Schwimmendes Solarenergiesystem (100), das mindestens ein Solardeck (110) und ein Paar Schwimmkörper (1201,1202) umfasst, wobei das Solardeck eine Trägerfläche und eine Vielzahl von Solarmodulen (115) zum Auffangen von Energie aus einer Strahlungsquelle umfasst, die auf der Trägerfläche montiert ist;
wobei das Solardeck an einer länglichen Kanten davon mit einem der Schwimmkörper (1201) und an einer gegenüberliegenden Kante mit dem anderen der Schwimmkörper (1202) mechanisch verbunden ist;
wobei die Solarmodule auf der Trägerfläche des Solardecks in Reihen parallel zu den Kanten angebracht sind, **dadurch gekennzeichnet, dass**
die Trägerfläche eine Vielzahl von länglichen Trägerplatten (112) umfasst, die der Länge nach parallel zu den Kanten und nebeneinander angeordnet sind; wobei die Trägerplatten durch Zwischenverbindungen (114) miteinander gekoppelt sind, wobei jede Reihe von Solarmodulen auf einer jeweiligen der Trägerplatten angeordnet ist,
wobei die Trägerplatten (112) aus miteinander verbundenen aufblasbaren Kammern bestehen, und
das System konfiguriert ist, um das Solardeck durch Falten der Trägerplatten der Trägerfläche zu einem gefalteten Stapel (S2) zusammenzuziehen, in dem die Oberflächen der Solarmodule auf den Trägerplatten einander zugewandt sind, und um das Solardeck durch Entfalten der Trägerplatten der Trägerfläche in dem Stapel zu einem im Wesentlichen flachen Zustand (S1) auszudehnen.

2. System nach Anspruch 1, wobei die Schwimmkörper in relativ geringem Abstand zueinander angeordnet sind, wenn das Solardeck zusammengezogen ist, und in einem relativ großen Abstand, wenn das Solardeck ausgedehnt ist, wobei der große Abstand größer als der geringe Abstand ist.

3. System nach Anspruch 1 oder Anspruch 2, das ferner einen oder mehrere zusätzliche Schwimmkörper zusätzlich zu dem Paar Schwimmkörper umfasst, wobei der eine oder die mehreren zusätzlichen Schwimmkörper zwischen dem Paar Schwimmkörper als zusätzliche Unterstützung für die Trägerfläche angeordnet sind.

4. System nach einem der vorhergehenden Ansprüche 1 - 3, wobei das System ferner eine Anordnung aus einer Vielzahl von Kabeln (134; 1341, 1342) und Rollen (135; 1351, 1352) zum Zusammenziehen des Solardecks umfasst, wobei jedes der Kabel den einen der Schwimmkörper mit dem anderen der Schwimmkörper verbindet.

5. System nach Anspruch 4, wobei das System eine Gaspumpe (130) umfasst, die mit den Kammern verbunden ist, um die Kammern unter Druck zu setzen, während das Solardeck ausgedehnt ist, und die miteinander verbundenen aufblasbaren Kammern mindestens ein steuerbares Ventil (138) umfassen, um Gas aus den Kammern freizusetzen, wenn sie sich zusammenziehen, und/oder die Gaspumpe eine reversible Gaspumpe ist.

6. System nach Anspruch 1 oder Anspruch 5, wobei eine oder mehrere der aufblasbaren Kammern eine Drop-Stitch-Kammeranordnung sind, wobei die Drop-Stitch-Kammer ein Paar gegenüberliegender gasdichter Schichten (1121, 1122) mit einer Vielzahl von Fäden von im Wesentlichen konstanter Länge umfasst, die zwischen den Schichten angebracht sind.

7. System nach Anspruch 5, wobei die Verbindung (114) zwischen benachbarten Kammern entweder aus einem fadenlosen Teil der gasdichten Schichten, der eine Leitung für den Gasfluss zwischen den Kammern bildet, oder aus einem flexiblen Streifen besteht.

8. System nach einem der vorhergehenden Ansprüche, wobei die Solarmodule (115) auf Silizium-basierten Solarzellen oder Dünnschicht-Photovoltaikfolien basieren.

9. System nach Anspruch 8, wobei jedes Solarmodul (115) entweder mit einer Deckschicht zum Schutz der Oberfläche des Solarmoduls versehen ist, wenn das Solardeck gefaltet ist,
oder mit Abstandshaltern, um die einander zugewandten Solarmodule in dem Stapel voneinander zu beabstanden, wenn das Solardeck gefaltet ist.

10. System nach einem der vorhergehenden Ansprüche 1 - 9, wobei die Trägerplatten (112) mit einem Durchgang oder Schlitz für jedes Kabel (134; 1341, 1342) versehen sind, das zwischen dem Paar Schwimmkörper (1201, 1202) verläuft.

11. System nach einem der vorhergehenden Ansprüche 2 - 10, wobei der mindestens eine zusätzliche Schwimmkörper eine ähnliche Form und Länge wie das Paar Schwimmkörper aufweist.

12. System nach einem der vorhergehenden Ansprüche 2 - 10, wobei der mindestens eine zusätzliche Schwimmkörper entweder aus einem einzelnen Schwimmelement oder einer Reihe von Schwimmelementen besteht, die in einer Reihe parallel zu der Länge eines jeden des Paares von Schwimmkörpern angeordnet sind.

13. Verfahren zum Betreiben eines schwimmenden Solarenergiesystems (100), das mindestens ein Solardeck (110) und ein Paar Schwimmkörper (1201, 1202) umfasst, wobei das Solardeck eine Trägerfläche und eine Vielzahl von Solarmodulen (115) zum Auffangen von Energie aus einer Strahlungsquelle umfasst, die auf der Trägerfläche montiert ist,
wobei das Solardeck an einer länglichen Kante davon mit einem (1201) der Schwimmkörper und an der gegenüberliegenden Kante mit dem anderen (1202) der Schwimmkörper mechanisch verbunden ist, und
die Solarmodule in einem im Wesentlichen flachen Zustand des Solardecks auf der Trägerfläche des Solardecks in Reihen parallel zu den Kanten angeordnet sind, wobei jedes der Solarmodule so ausgerichtet ist, dass es der Strahlungsquelle zugewandt ist,
wobei die Trägerfläche eine Vielzahl von länglichen Trägerplatten umfasst, die der Länge nach parallel zu den Kanten und nebeneinander angeordnet sind; wobei die Trägerplatten durch eine oder mehrere Zwischenverbindungen (114) miteinander gekoppelt sind; wobei jede Reihe von Solarmodulen auf einer jeweiligen der Trägerplatten angeordnet ist, wobei die Trägerplatten (112) aus miteinander verbundenen aufblasbaren Kammern bestehen,
wobei das Verfahren Folgendes umfasst:
Bereitstellen eines Schritts zum Zusammenziehen des Solardecks durch Falten der Trägerplatten der Trägerfläche aus dem im Wesentlichen flachen Zustand (S1) in einen gefalteten Stapel oder eine gefaltete Form (S2), in der die Oberflächen der Solarmodule auf den Trägerplatten einander zugewandt sind, und
eines Schritts zum Ausdehnen des Solardecks aus dem gefalteten Stapel (S2) in den im Wesentlichen flachen Zustand (S1) durch Entfalten der Trägerplatten der Trägerfläche in dem Stapel.

14. Verfahren zum Herstellen eines schwimmenden Solarenergiesystems (100), das mindestens ein Solardeck (110) und ein Paar Schwimmkörper (1201, 1202) umfasst, wobei das Solardeck eine Trägerfläche und eine Vielzahl von Solarmodulen (115) zum Auffangen von Energie aus einer Strahlungsquelle umfasst, die auf der Trägerfläche montiert ist, wobei das Verfahren Folgendes umfasst:
Bereitstellen der Vielzahl von Solarmodulen,
Bereitstellen der Trägerfläche, die eine Vielzahl von länglichen Trägerplatten (112) umfasst, die der Länge nach parallel und nebeneinander angeordnet sind, wobei die Trägerplatten durch Zwischenverbindungen (114) miteinander gekoppelt sind und wobei die Trägerplatten (112) aus miteinander verbundenen aufblasbaren Kammern bestehen;
Bereitstellen des Paares von Schwimmkörpern;
Anbringen jeder Reihe von Solarmodulen auf einer der jeweiligen Trägerplatten, um das Solardeck zu bilden;
Verbinden des Solardecks an einer länglichen Kante davon mit einem der Schwimmkörper und an der gegenüberliegenden Kante mit dem anderen der Schwimmkörper, wobei die Kanten parallel zu den Verbindungen verlaufen;
Bereitstellen einer Konfiguration des Systems zum Zusammenziehen des Solardecks durch Falten der Trägerplatten der Trägerfläche als gefalteter Stapel in einen gefalteten Zustand (S2), in dem die Oberflächen der Solarmodule auf den Trägerplatten einander zugewandt sind, und einer Konfiguration zum Ausdehnen des Solardecks aus dem gefalteten Zustand des gefalteten Stapels in einen im Wesentlichen flachen Zustand (S1) durch Entfalten der Trägerplatten der Trägerfläche in dem Stapel.

## Revendications

1. Système d'énergie solaire flottant (100) comprenant au moins un pont solaire (110) et une paire de corps flottants (1201, 1202), le pont solaire comprenant une surface de support et une pluralité de panneaux solaires (115) pour capturer l'énergie d'une source de rayonnement qui est montée sur la surface de support ;
le pont solaire est relié mécaniquement à l'un des corps flottants (1201) par l'un de ses bords allongés et à l'autre des corps flottants (1202) par un bord opposé ;
les panneaux solaires sont fixés sur la surface de support du pont solaire en rangées parallèles aux bords, **caractérisé en ce que**
la surface de support comprend une pluralité de panneaux de support allongés (112) disposés dans le sens de la longueur parallèlement aux bords et les uns à côté des autres ; les panneaux de support sont couplés les uns aux autres par des joints intermédiaires (114), chaque rangée de panneaux solaires étant disposée sur l'un des panneaux de support respectifs,
où les panneaux de support (112) se composent de compartiments gonflables interconnectés et
le système est configuré pour contracter le pont solaire en pliant les panneaux de support de la surface de support en une pile plissée (S2) dans laquelle les surfaces des panneaux solaires sur les panneaux de support se font face et pour étendre le pont solaire à un état sensiblement plat (S1) de la surface de support en dépliant les panneaux de support de la surface de support dans la pile.

2. Système selon la revendication 1, où les corps flottants sont positionnés à une distance relativement proche les uns des autres lorsque le pont solaire est contracté et à une distance relativement éloignée lorsque le pont solaire est étendu, la distance éloignée étant supérieure à la distance proche.

3. Système selon la revendication 1 ou la revendication 2, comprenant en outre un ou plusieurs corps flottants supplémentaires en plus de la paire de corps flottants, l'un ou plusieurs corps flottants supplémentaires disposés entre la paire de corps flottants comme support supplémentaire pour la surface de support.

4. Système selon l'une quelconques des revendications précédentes 1 à 3, où le système comprend en outre un agencement d'une pluralité de câbles (134 ; 1341, 1342) et de poulies (135 ; 1351, 1352) pour la contraction du pont solaire, chacun des câbles reliant l'un des corps flottants à l'autre des corps flottants.

5. Système selon la revendication 4, où le système comprend une pompe à gaz (130) reliée aux compartiments pour pressuriser les compartiments pendant que le pont solaire est étendu, et les compartiments gonflables interconnectés comprennent au moins une valve contrôlable (138) pour libérer le gaz des compartiments lors de la contraction et/ou la pompe à gaz est une pompe à gaz réversible.

6. Système selon la revendication 1 ou la revendication 5, où un ou plusieurs des compartiments gonflables est un agencement de chambre dropstitch avec la chambre dropstitch comprenant une paire de couches opposées étanches aux gaz (1121, 1122) avec une pluralité de fils de longueur sensiblement constante attachés entre les couches.

7. Système selon la revendication 5, où le joint (114) entre les compartiments adjacents se compose soit d'une partie des couches étanches aux gaz dépourvues de fils formant un conduit pour le flux de gaz entre les compartiments, soit d'une bande flexible.

8. Système selon l'une quelconque des revendications précédentes, où les panneaux solaires (115) sont constitués de cellules solaires à base de silicium ou de films photovoltaïques à couche mince.

9. Système selon la revendication 8, où chaque panneau solaire (115) est pourvu soit d'une couche de protection pour protéger la surface du panneau solaire lorsque le pont solaire est plié,
soit d'entretoises pour espacer les panneaux solaires qui se font face dans la pile lorsque le pont solaire est plié.

10. Système selon l'une quelconque des revendications précédentes 1 à 9, où les panneaux de support (112) sont pourvus d'un passage ou d'une fente pour chaque câble (134 ; 1341, 1342) passant entre la paire de corps flottants (1201, 1202).

11. Système selon l'une quelconque des revendications précédentes 2 à 10, où l'au moins un corps flottant supplémentaire a une forme et une longueur similaires à celles de la paire de corps flottants.

12. Système selon l'une quelconque des revendications précédentes 2 à 10, où l'au moins un corps flottant supplémentaire se compose soit d'un élément flottant unique, soit d'une série d'éléments flottants assemblés en une rangée parallèle à la longueur de chacun de la paire de corps flottants.

13. Procédé de fonctionnement d'un système d'énergie solaire flottant (100) comprenant au moins un pont solaire (110) et une paire de corps flottants (1201, 1202), le pont solaire comprenant une surface de support et une pluralité de panneaux solaires (115) pour capturer l'énergie d'une source de rayonnement qui est montée sur la surface de support,
dans lequel le pont solaire est relié mécaniquement à l'un des corps flottants (1201) par l'un de ses bords allongés et à l'autre des corps flottants (1202) par un bord opposé et
dans un état sensiblement plat du pont solaire, les panneaux solaires sont disposés sur la surface de support du pont solaire en rangées parallèles aux bords, chacun des panneaux solaires étant orienté de manière à faire face à la source de rayonnement,
où la surface de support comprend une pluralité de panneaux de support allongés disposés dans le sens de la longueur parallèlement aux bords et les uns à côté des autres ; les panneaux de support sont couplés les uns aux autres par un ou plusieurs joints intermédiaires (114) ; chaque rangée de panneaux solaires étant disposée sur l'un des panneaux de support respectifs, où les panneaux de support (112) se composent de compartiments gonflables interconnectés
le procédé comprenant
fournir une étape de contraction du pont solaire en pliant les panneaux de support de la surface de support de l'état sensiblement plat (S1) en une pile de style plissé ou une forme pliée (S2) dans laquelle les surfaces des panneaux solaires sur les panneaux de support se font face et
une étape d'expansion du pont solaire de la pile de style plissé (S2) à l'état sensiblement plat (S1) en dépliant les panneaux de support de la surface de support dans la pile.

14. Procédé de fabrication d'un système d'énergie solaire flottant (100) comprenant au moins un pont solaire (110) et une paire de corps flottants (1201, 1202), le pont solaire comprenant une surface de support et une pluralité de panneaux solaires (115) pour capturer l'énergie d'une source de rayonnement qui est montée sur la surface de support, le procédé comprenant :
fournir la pluralité de panneaux solaires,
fournir la surface de support comprenant une pluralité de panneaux de support allongés (112) disposés dans le sens de la longueur parallèlement et les uns à côté des autres, dans laquelle les panneaux de support sont couplés les uns aux autres par des joints intermédiaires (114) et où les panneaux de support (112) se composent de compartiments gonflables interconnectés ;
fournir la paire de corps flottants ;
fixer chaque rangée de panneaux solaires sur l'un des panneaux de support respectifs pour former le pont solaire ;
relier le pont solaire à l'un des corps flottants par l'un de ses bords allongés et au bord opposé avec l'autre des corps flottants, les bords étant parallèles aux joints ;
fournir une configuration du système pour contracter le pont solaire en pliant les panneaux de support de la surface de support en une pile de style plissé dans un état plié (S2) dans lequel les surfaces des panneaux solaires sur les panneaux de support se font face et une configuration pour étendre le pont solaire de l'état plié de la pile de style plissé à un état sensiblement plat (S1) en dépliant les panneaux de support de la surface de support dans la pile.
